(19)

Europäisches Patentamt
European Patent Office
Office européen des brevets

(11) **EP 4 297 173 A1**

(12) **EUROPEAN PATENT APPLICATION**
published in accordance with Art. 153(4) EPC

(43) Date of publication:
**27.12.2023 Bulletin 2023/52**

(21) Application number: **22756553.8**

(22) Date of filing: **18.02.2022**

(51) International Patent Classification (IPC):
*H01M 50/538* (2021.01)    *H01M 50/536* (2021.01)
*H01M 10/04* (2006.01)

(52) Cooperative Patent Classification (CPC):
**H01M 4/13; H01M 4/64; H01M 10/04;
H01M 10/052; H01M 50/249; H01M 50/502;
H01M 50/536; H01M 50/538**

(86) International application number:
**PCT/KR2022/002436**

(87) International publication number:
**WO 2022/177355 (25.08.2022 Gazette 2022/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.02.2021 KR 20210022832**

(71) Applicant: **LG Energy Solution, Ltd.
Seoul 07335 (KR)**

(72) Inventors:
• JO, Minki
  **Daejeon 34122 (KR)**
• KIM, Do Gyun
  **Daejeon 34122 (KR)**
• HWANG BO, Kwang Su
  **Daejeon 34122 (KR)**
• CHOI, Suji
  **Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **SECONDARY BATTERY, AND BATTERY PACK AND VEHICLE COMPRISING SAME**

(57)    The present specification provides a secondary battery including an electrode assembly made by stacking and winding a first electrode, a separator, and a second electrode, the first electrode including a first electrode current collector and an electrode active material layer provided on the first electrode current collector, in which a non-coated portion of the first electrode, on which the electrode active material layer is not provided, is provided at a long side end of the first electrode based on a direction in which the current collector is wound, and a current collecting plate provided at one end of the electrode assembly at which the non-coated portion of the first electrode is exposed, the current collecting plate including: a central portion corresponding to a core of the electrode assembly, and two or more legs each having one end connected to the central portion, the leg extending in a direction toward an outer periphery of the electrode assembly, in which the central portion includes a current collecting plate hole.

[Figure 6]

**Description**

[Technical Field]

The present invention relates to a secondary battery and a battery pack and a vehicle including the same.
This application claims priority to and the benefit of Korean Patent Application No. 10-2021-0022832 filed with the Korean Intellectual Property Office on February 19, 2021, the entire contents of which are incorporated herein by reference.

[Background Art]

A secondary battery is easy to apply to product groups and has high electrical characteristics such as high energy density. Therefore, the secondary battery is widely applied not only to portable devices but also to electric vehicles (EVs) or hybrid electric vehicles (HEVs) driven by electrical driving sources.
The secondary battery attracts attention as a new energy source for improving environmental-friendly characteristics and energy efficiency because the secondary battery achieves a primary advantage of innovatively reducing the use of fossil fuel and does not generate any by-products from the use of energy.
Types of secondary batteries currently used widely include a lithium-ion battery, a lithium-polymer battery, a nickel-cadmium battery, a nickel-hydrogen battery, a nickel-zinc battery, and the like. An operating voltage of a unit secondary battery cell, i.e., a unit battery is about 2.5 V to 4.5 V Therefore, when an output voltage higher than the operating voltage is required, a plurality of batteries is connected in series and constitutes a battery pack. In addition, the plurality of batteries is connected in parallel and constitutes the battery pack depending on a charge/discharge capacity required for the battery pack. Therefore, the number of batteries included in the battery pack and the type of electrical connection between the batteries may be variously set depending on required output voltages and/or charge/discharge capacities.
Meanwhile, cylindrical batteries, angular batteries, and pouch batteries are known as the types of unit secondary battery cells. The cylindrical battery is made by interposing a separator, which is an insulator, between a positive electrode and a negative electrode, rolling the assembly of the separator, the positive electrode, and the negative electrode to form an electrode assembly in the form of a jelly roll, and inserting the electrode assembly into a battery housing. The battery housing is called a battery can in the art. Further, electrode tabs may be connected to non-coated portions of the positive and negative electrodes, respectively. The electrode tab electrically connects the electrode assembly and an electrode terminal exposed to the outside.
However, a structure of the electrode tab, which connects the jelly-roll type electrode assembly and the external terminal, has a restricted current path. For this reason, resistance of the jelly-roll type electrode assembly is inevitably high, and there is a need to implement a new current path.

[Detailed Description of the Invention]

[Technical Problem]

The present specification provides a secondary battery having a short current path for electrical connection between a current collecting plate and an electrode assembly and also having a structure excellent in performance in injecting an electrolyte.

[Technical Solution]

An embodiment of the present specification provides a secondary battery including: an electrode assembly made by stacking and winding a first electrode, a separator, and a second electrode, the first electrode including a first electrode current collector and an electrode active material layer provided on the first electrode current collector, in which a non-coated portion of the first electrode, on which the electrode active material layer is not provided, is provided at a long side end of the first electrode based on a direction in which the current collector is wound; and a current collecting plate provided at one end of the electrode assembly at which the non-coated portion of the first electrode is exposed, the current collecting plate including: a central portion corresponding to a core of the electrode assembly; and two or more legs each having one end connected to the central portion, the leg extending in a direction toward an outer periphery of the electrode assembly and electrically connected to the non-coated portion of the first electrode, in which the central portion includes a current collecting plate hole.
In the embodiment of the present specification, the two or more legs of the current collecting plate may have a straight shape, a cross shape, or a combination of the straight and cross shapes.

In the embodiment of the present specification, the two or more legs may each be welded and electrically connected to the non-coated portion of the first electrode.

In the embodiment of the present specification, a thickness of the current collecting plate may be 0.15 mm or more and 0.6 mm or less.

In the embodiment of the present specification, the current collecting plate may further include a terminal connection part electrically connected to the central portion.

In the embodiment of the present specification, a length of the leg may be 25% or more and 50% or less based on 100% of an outer diameter of the secondary battery.

In the embodiment of the present specification, a width of the leg may be 6% or more and 22% or less based on 100% of an outer diameter of the secondary battery.

In the embodiment of the present specification, a ratio of an area in which the current collecting plate and the non-coated portion of the first electrode are in contact with each other may be 10% or more and 99% or less based on 100% of an area of a surface of the current collecting plate facing the non-coated portion of the first electrode.

Based on 100% of an area of the surface of the current collecting plate facing the non-coated portion of the first electrode, the ratio of an area in which the current collecting plate and the non-coated portion of the first electrode are in contact with each other means a percentage of an area in which the current collecting plate facing the non-coated portion of the first electrode is in contact with the non-coated portion of the first electrode.

In the embodiment of the present specification, a ratio of an area in which the non-coated portion of the first electrode and the current collecting plate are in contact with each other may be 10% or more and 99% or less based on 100% when an area of the surface of the non-coated portion of the first electrode facing the current collecting plate.

Based on 100% of an area of the surface of the non-coated portion of the first electrode facing the current collecting plate, the ratio of an area in which the non-coated portion of the first electrode and the current collecting plate are in contact with each other means a percentage of an area in which the non-coated portion of the first electrode facing the current collecting plate is in contact with the current collecting plate.

In the embodiment of the present specification, an aperture ratio of the current collecting plate, which is defined by the following Equation 1, may be 20% or more and less than 100%.

[Equation 1]

Aperture ratio (%) = 1 - (an area in which the current collecting plate is in contact with an upper surface of the electrode assembly) / (an area of a circle having a diameter equal to an outer diameter of the electrode assembly) = (an area in which the current collecting plate is not in contact with the upper surface of the electrode assembly) / (the area of the circle having the diameter equal to the outer diameter of the electrode assembly)

In the embodiment of the present specification, the terminal connection part may be bent one or more times in a direction toward the central portion of the current collecting plate.

In the embodiment of the present specification, the terminal connection part may be provided between the adjacent two legs.

In the embodiment of the present specification, a thickness of a connection part between the terminal connection part and the current collecting plate may be equal to a thickness of the current collecting plate.

In the embodiment of the present specification, a length of the terminal connection part may be 20 mm or more and 40 mm or less.

In the embodiment of the present specification, a width of the terminal connection part may be 8% or more and 35% or less based on 100% of an outer diameter of the secondary battery.

In the embodiment of the present specification, the secondary battery may further include: a battery can configured to accommodate the electrode assembly and including an opening portion; and a sealing body configured to seal the opening portion of the battery can and including a cap plate and a sealing gasket, and the terminal connection part may be coupled to a connection plate attached to the cap plate.

The embodiment of the present specification provides a battery pack including a plurality of secondary batteries described above.

The embodiment of the present specification provides a vehicle including at least one battery pack described above.

[Advantageous Effects]

According to the embodiment of the present specification, the secondary battery may have the short current path, thereby reducing the resistance. Further, the secondary battery may provide sufficient space into which the electrolyte may be injected, thereby ensuring excellent performance in injecting the electrolyte.

[Brief Description of Drawings]

FIG. 1 is a top plan view illustrating a structure of an electrode plate used for a secondary battery according to an embodiment of the present specification.

FIG. 2 is a view illustrating a process of winding an electrode assembly according to the embodiment of the present specification.

FIG. 3 is a view illustrating a process of welding a current collecting plate to a bent surface of a non-coated portion of the electrode assembly illustrated in FIG. 2.

FIG. 4 is a cross-sectional view taken in a longitudinal direction Y and illustrating the secondary battery according to the embodiment of the present specification.

FIG. 5 is a view exemplarily illustrating a current collecting plate having a straight shape according to the embodiment of the present specification.

FIG. 6 is a view exemplarily illustrating a current collecting plate having a cross shape according to the embodiment of the present specification.

FIG. 7 is a view exemplarily illustrating a current collecting plate having a combination of straight and cross shapes according to the embodiment of the present specification.

FIGS. 8 to 10 are views illustrating a structure for coupling the current collecting plate and the electrode assembly according to the embodiment of the present specification.

FIG. 11 is a partial cross-sectional view illustrating a lower structure of a cylindrical secondary battery according to the embodiment of the present specification.

FIG. 12 is a top plan view exemplarily illustrating an electrode structure according to the embodiment of the present specification.

FIG. 13 is a cross-sectional view taken in the longitudinal direction Y and illustrating the electrode assembly according to the embodiment of the present specification in which a segmental structure of a non-coated portion of the electrode is applied to first and second electrodes.

FIG. 14 is a cross-sectional view taken in the longitudinal direction Y and illustrating the electrode assembly according to the embodiment of the present specification in which a non-coated portion is bent.

FIG. 15 is a view illustrating a schematic configuration of a battery pack including the secondary batteries according to the embodiment of the present specification.

FIG. 16 is a view illustrating a schematic configuration of a vehicle including the battery pack according to the embodiment of the present specification.

[Explanation of Reference Numerals and Symbols]

A: Electrode assembly
10: Positive plate
11: Negative plate
10a: Non-coated portion of first electrode
11a: Non-coated portion of second electrode
12: Separator
20, 91: Current collector
21: 92: Active material
22: 93: Non-coated portion
30: Current collecting plate

30a: Leg

30b: Welding part

30c: Current collecting plate hole

R1: Radius of current collecting plate hole

31: Second current collecting plate

40: Secondary battery

41: Battery can

41a: Venting portion

42: Sealing body

42a: Cap plate

42b: Sealing gasket

42c: Connection plate

43: Crimping portion

44: Beading portion

45: Terminal connection part

46: Insulator

47: Insulator hole

72: Non-coated portion protruding downward

73: Non-coated portion protruding upward

80: Cavity

90: Electrode

93a: Segmental piece

93': Core side non-coated portion

94: Insulating coating layer

101: Bent portion

102: Bent surface

200: Battery pack

201: Cylindrical secondary battery

202: Pack housing

V: Vehicle

L: Outer diameter of secondary battery

[Best Mode]

Hereinafter, the present specification will be described in more detail.

Hereinafter, exemplary embodiments of the present invention will be described in detail with reference to the accompanying drawings. In addition, terms or words used in the specification and the claims should not be interpreted as being limited to a general or dictionary meaning and should be interpreted as a meaning and a concept which conform to the technical spirit of the present invention based on a principle that an inventor can appropriately define a concept of a term in order to describe his/her own invention by the best method. Therefore, the exemplary embodiments disclosed in the present specification and the configurations illustrated in the drawings are just the best preferred exemplary embodiments of the present invention and do not represent all the technical spirit of the present invention. Accordingly, it should be appreciated that various equivalents and modified examples capable of substituting the exemplary embodiments may be made at the time of filing the present application.

In addition, to help understand the present invention, the accompanying drawings are not illustrated based on actual scales, but some constituent elements may be exaggerated in dimension. In addition, the constituent elements in different embodiments may be assigned with the same reference numerals.

In the present specification, the term "on" not only means that a component is positioned on one layer while being in physical contact with the layer but also means that a component is positioned above one layer. That is, another layer may be present between layers positioned on any one layer.

In the specification of the present application, unless explicitly described to the contrary, the word "comprise" or "include" and variations, such as "comprises", "comprising", "includes" or "including", will be understood to imply the inclusion of stated constituent elements, not the exclusion of any other constituent elements.

A secondary battery according to an embodiment of the present specification includes: an electrode assembly made by stacking and winding a first electrode, a separator, and a second electrode, the first electrode including a first electrode current collector and an electrode active material layer provided on the first electrode current collector, in which a non-coated portion of the first electrode, on which the electrode active material layer is not provided, is provided at a long side end of the first electrode based on a direction in which the current collector is wound; and a current collecting plate provided at one end of the electrode assembly at which the non-coated portion of the first electrode is exposed, the current collecting plate including: a central portion corresponding to a core of the electrode assembly; and two or more legs each having one end connected to the central portion, the leg extending in a direction toward an outer periphery of the electrode assembly and electrically connected to the non-coated portion of the first electrode, in which the central portion includes a current collecting plate hole.

In the case of a secondary battery in the related art, a non-coated portion of an electrode of an electrode assembly is positioned in a separator and managed so as not to be exposed. As a method of connecting an electrode assembly and an electrode terminal, electrode tabs are respectively connected to the non-coated portions of the positive and negative electrodes, and the electrode tabs electrically connect the electrode assembly and external electrode terminals. However, a structure of an electrode tab, which connects a jelly-roll type electrode assembly and an external electrode terminal, has a restricted current path. For this reason, resistance of the jelly-roll type electrode assembly is inevitably high. That is, in a case in which a limited number of electrode tabs is applied, the current flowing through the current collecting plate cannot smoothly flow out through a narrow path of the electrode tab.

A secondary battery according to the present invention does not use a structure in the related art in which the electrode tab is connected to the non-coated portion of the electrode and the structure in which the non-coated portion of the electrode is positioned in the separator and managed so as not to be exposed. The secondary battery according to the present invention has a structure in which a non-coated portion of the first electrode is exposed to an upper surface of an electrode assembly and a current collecting plate is provided at one end of the exposed non-coated portion of the first electrode in order to implement various current paths.

In this case, the current collecting plate according to the present invention includes two or more legs used as current paths and thus has a structure in which each of the legs and the non-coated portion of the first electrode are in contact with and electrically connected to each other. Therefore, a plurality of passageways through which the current may move from the non-coated portion of the first electrode to the current collecting plate may be made, such that a magnitude of resistance applied to the electrode assembly may be significantly reduced in comparison with the structure in the related art.

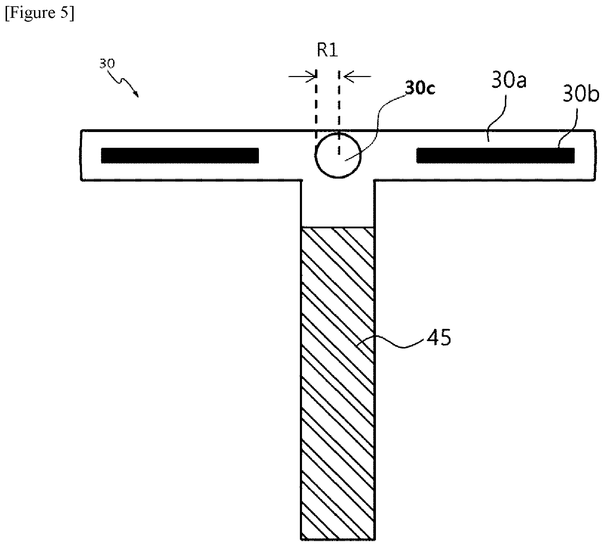

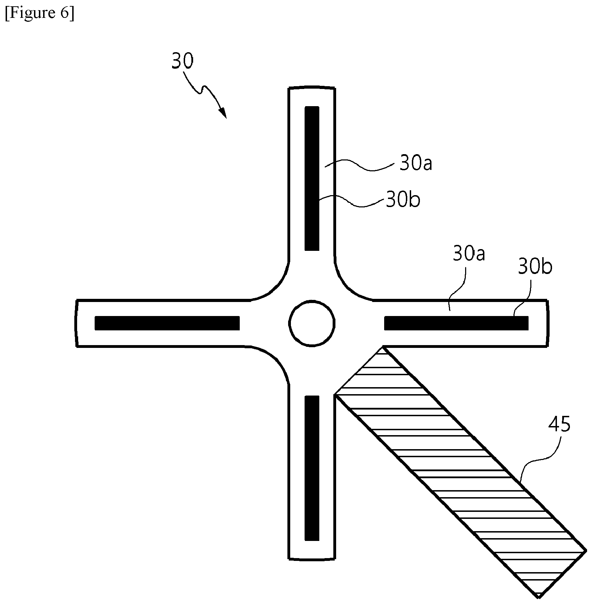

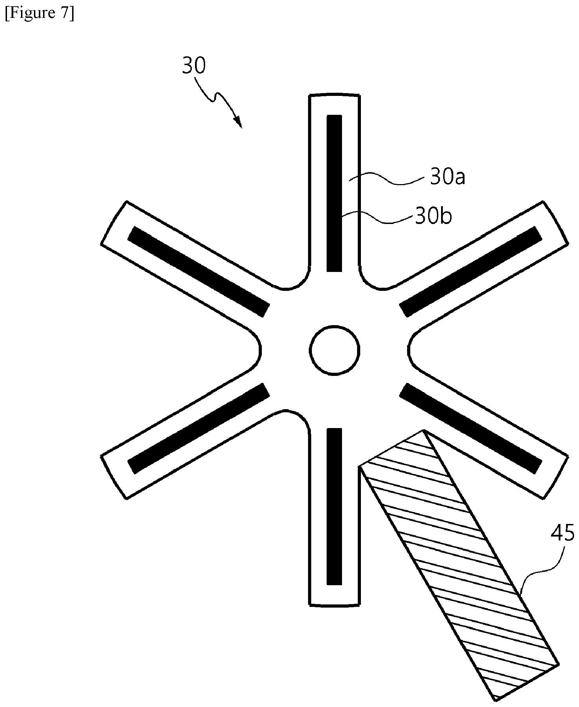

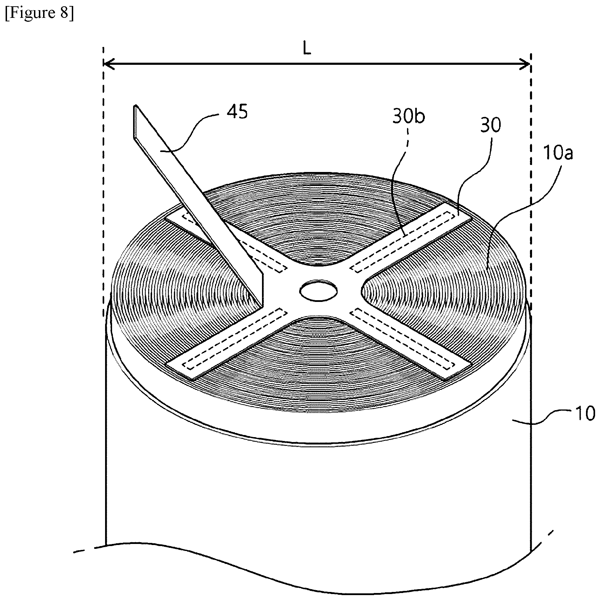

As illustrated in FIGS. 5 to 7, legs 30a each have a structure connected to a central portion of a current collecting plate. The shape of the leg according to the present invention is not limited by the shape of the leg illustrated in FIGS. 5 to 7. For example, FIG. 8 illustrates a structure in which a current collecting plate 30 including four legs is positioned at one end of the electrode assembly with the exposed non-coated portion of the first electrode. A plurality of portions where the non-coated portion 10a of the first electrode and the current collecting plate are in contact with each other through the four legs is formed.

In the embodiment of the present specification, the current collecting plate 30 may be made of a metallic material having conductivity.

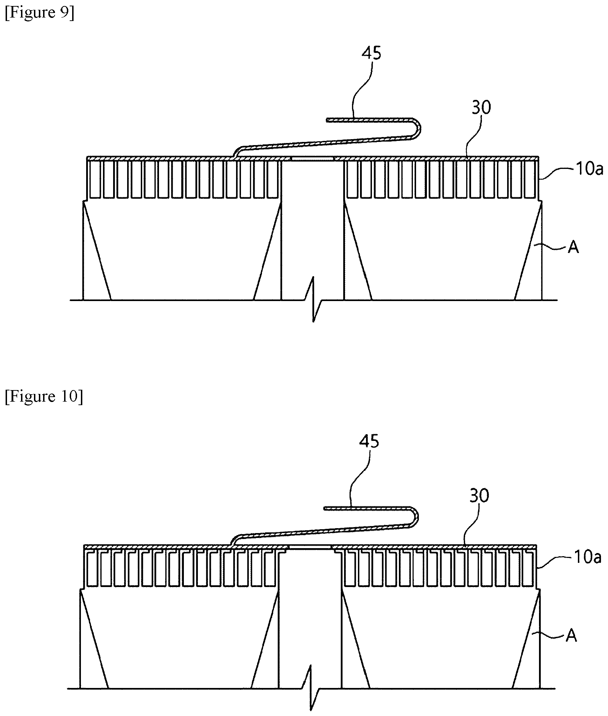

In the embodiment of the present specification, the current collecting plate 30 may be provided at one end of the electrode assembly with the exposed non-coated portion 10a of the first electrode. FIG. 9 is a view implemented by cutting the secondary battery in a longitudinal direction Y and exemplarily illustrating a structure in which the current collecting plate 30 is coupled to an end of the non-coated portion 10a of the first electrode, and the current collecting plate is coupled to the end of the non-coated portion of the first electrode.

In the embodiment of the present specification, the current collecting plate 30 and the non-coated portion 10a of the first electrode may be coupled by laser welding, spot welding, or ultrasonic welding.

In the embodiment of the present specification, the current collecting plate may be coupled to a coupling surface (bent surface) formed by bending the end of the non-coated portion of the first electrode one or more times in a direction parallel to the current collecting plate. A direction in which the non-coated portion of the first electrode is bent may be a radial direction of the electrode assembly. For example, a direction in which the non-coated portion of the first electrode is bent may be a direction toward a winding axis of the electrode assembly.

In the case in which the non-coated portion of the first electrode has a bent shape as described above, a space occupied by the non-coated portion of the first electrode may be reduced, thereby improving energy density. In addition, a coupling area between the current collecting plate and the non-coated portion of the first electrode increases, which makes it possible to increase a coupling force and reduce contact resistance. FIG. 10 is a view implemented by cutting the secondary battery in the longitudinal direction Y and exemplarily illustrating a structure in which the current collecting plate is coupled to the coupling surface formed by bending the end of the non-coated portion of the first electrode in the direction parallel to the current collecting plate.

In the embodiment of the present specification, the current collecting plate includes a central portion 30e corresponding to a core of the electrode assembly. The configuration in which the central portion corresponds to the core of the electrode assembly means that as illustrated in FIG. 8, the central portion of the current collecting plate is positioned at a central portion including the core at the portion where the non-coated portion of the first electrode of the electrode assembly is exposed. However, the configuration in which the central portion corresponds to the core of the electrode assembly does not mean that a size of the central portion of the current collecting plate is unconditionally equal to a size of the core of the electrode assembly.

In the embodiment of the present specification, the current collecting plate includes a current collecting plate hole 30c formed at the central portion thereof.

In the embodiment of the present specification, a radius R1 of the current collecting plate hole 30c may be 100% or more or 110%, 100% or more and 107% or less, or 100% or more and 105% or less based on 100% of a diameter of the core of the electrode assembly.

When the range is satisfied, the performance in injecting the electrolyte into the electrode assembly may be improved.

In the embodiment of the present specification, a thickness of the current collecting plate may be 0.15 mm or more and 0.6 mm or less, 0.15 mm or more and 0.5 mm or less, or 0.17 mm or more and 0.3 mm or less.

When the range is satisfied, the welding processibility may be ensured, and appropriate resistance may be implemented, thereby obtaining an appropriate amount of heat generation. When the thickness of the current collecting plate is too large, the resistance decreases, and the amount of heat generation decreases, but the welding processibility deteriorates. When the thickness of the current collecting plate is too small, the resistance increases, and the amount of heat generation increases, but the welding processibility is improved.

In the present specification, the leg means a portion having one end coupled to the central portion of the current collecting plate and extending in a direction toward an outer periphery of the electrode assembly.

In the embodiment of the present specification, the two or more legs of the current collecting plate may have a straight shape, a cross shape, or a combination of the straight and cross shapes.

In the embodiment of the present specification, a shape defined by the two or more legs of the current collecting plate may be a straight shape, a cross shape, or a combination of the straight and cross shapes.

In the case in which the current collecting plate according to the present invention has the above-mentioned shape, the number of welding sections increases at the time of welding the current collecting plate to the non-coated portion of the first electrode. Therefore, stress is dispersed, and electrical resistance and resistance generated against an external force applied during the welding process may be decreased. Further, it is possible to prevent the current collecting plate from being bent and lifted up without being in close contact with the electrode assembly after the welding process.

In the embodiment of the present specification, a thickness of the leg may be 0.15 mm or more and 0.6 mm or less, 0.15 mm or more and 0.5 mm or less, or 0.17 mm or more and 0.3 mm or less, or equal to a thickness of the current collecting plate.

In the embodiment of the present specification, a length of the leg may be 25% or more and 50% or less, 30% or more and 45% or less, or 30% or more and 40% or less based on 100% of an outer diameter L of the secondary battery. The length of the leg means a length from a connection part between the leg and the central portion of the current collecting plate to a distal end of the leg extending from the connection part.

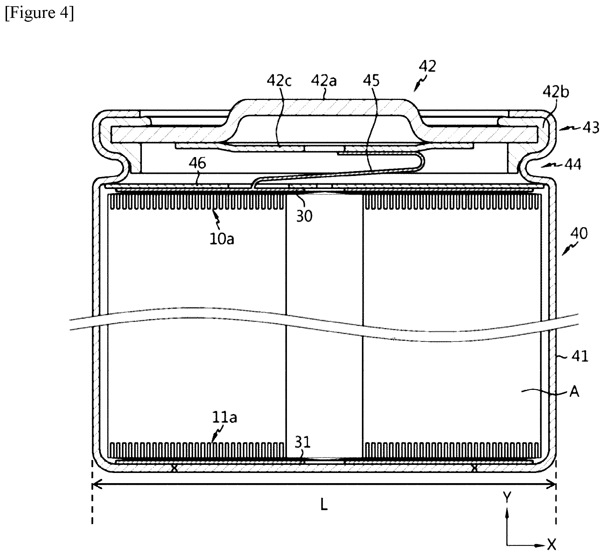

In the present specification, an outer diameter of the secondary battery means a maximum distance between a central portion of a battery can of the secondary battery and an outer surface of the battery can facing the electrode assembly, for example. The outer diameter of the secondary battery is indicated by L indicated by dotted lines in FIGS. 4 and 8.

In the embodiment of the present specification, a width of the leg may be 6% or more and 22% or less, 8% or more and 20% or less, or 10% or more and 15% or less based on 100% of the outer diameter of the secondary battery.

In the embodiment of the present specification, a rim of the leg may have a straight shape, a curved shape, or a combination of the straight and curved shapes. For example, the rim of the leg may have, but not limited to, a rectangular shape.

In the embodiment of the present specification, the legs may have the same width.

In the embodiment of the present specification, the width of the leg may increase or decrease in a direction toward the distal end of the leg.

In the embodiment of the present specification, an angle defined between the adjacent legs may be 60° to 180°.

In the embodiment of the present specification, the angle defined between the adjacent legs may be 60° to 120°.

In the embodiment of the present specification, the two or more legs may each include a welding part welded to the non-coated portion of the first electrode. The welding part means a part of the current collecting plate coupled to the non-coated portion of the first electrode by welding.

In the embodiment of the present specification, the two or more legs may each be welded and electrically connected to the non-coated portion of the first electrode.

Since the leg of the present invention includes the welding part, a portion where the welding part of the leg adjoins the non-coated portion of the first electrode is welded, such that the leg may be electrically connected to the non-coated portion of the first electrode. The welding may be performed as laser welding, spot welding, or ultrasonic welding.

The current collecting plate according to the present invention includes two or more legs 30 extending from the central portion 30e corresponding to the core of the electrode assembly in the direction toward the outer periphery of the electrode assembly, such that the respective legs and the non-coated portion of the first electrode are welded.

FIGS. 5 to 7 are views exemplarily illustrating shapes of the current collecting plates each having two, four, and six legs, and welding parts 30b are indicated in the legs.

In the embodiment of the present specification, the current collecting plate may include the leg including two or more welding parts, and the two or more welding part may have the same area. That is, the current collecting plate having four legs may have four welding parts, and the respective welding parts may have the same area.

In this case, the expression indicating that the two comparison targets are equal to each other means that the two comparison targets are 'substantially' equal to each other. Therefore, the substantial equality may include a case in which a deviation considered as being at a low level in the art is present, for example, a deviation within 5% is present.

In the embodiment of the present specification, an area of the welding part may be 10% to 50% of an overall area of the current collecting plate. When the area of the welding part satisfies the above-mentioned range, welding strength may increase, such that the electrode assembly and the current collecting plate, which are coupled to each other, may have excellent durability.

In the embodiment of the present specification, a ratio of an area in which the current collecting plate is not in contact with an upper surface of the electrode assembly to an area of a circle having a diameter equal to the outer diameter of the electrode assembly may be defined as an aperture ratio of the current collecting plate 30. The aperture ratio may be calculated from the following equation.

Aperture ratio (%) = 1 - (an area in which the current collecting plate is in contact with the upper surface of the electrode assembly) / (an area of a circle having a diameter equal to the outer diameter of the electrode assembly) = (an area in which the current collecting plate is not in contact with the upper surface of the electrode assembly) / (an area of a circle having a diameter equal to the outer diameter of the electrode assembly)

For example, the aperture ratio of the current collecting plate may be approximately 20% or more and less than 100%, particularly, approximately 30% or more and less than 100%. In an example illustrated in FIG. 8 in which the current collecting plate is coupled by being placed on the electrode assembly, a region in which the current collecting plate is in contact with the electrode assembly may include the central portion and each of the two or more legs each having one end connected to the central portion and extending in the direction toward the outer periphery of the electrode assembly. That is, the ratio of the area in which the current collecting plate is in contact with the electrode assembly to the area of the circle having the diameter equal to the outer diameter of the electrode assembly may be 80% or less, particularly, 70% or less. When the aperture ratio of the current collecting plate is within the range, the impregnation with the electrolyte may be smoothly performed. That is, the electrolytes move to an opening space while being radially distributed through the region in which the current collecting plate is not in contact with the upper surface of the electrode assembly, and then the electrolytes permeate into the electrode assembly.

In the embodiment of the present specification, the ratio of the area in which the current collecting plate is in contact with the non-coated portion of the first electrode may be 10% or more, 15% or more, 20% or more, 30% or more, 40% or more, 50% or more, 70% or more, or 90% or more and 99% or less, 98% or less, 95% or less, or 93% or less based on 100% of the area of the surface of the current collecting plate facing the non-coated portion of the first electrode.

When the area satisfies the above-mentioned ratio, the plurality of passageways through which the current may move from the non-coated portion of the first electrode to the current collecting plate may be effectively implemented, such that a magnitude of resistance applied to the electrode assembly may be reduced.

In the embodiment of the present specification, the ratio of the area in which the non-coated portion of the first electrode is in contact with the current collecting plate may be 10% or more, 15% or more, 20% or more, 30% or more, 40% or more, 50% or more, 70% or more, or 90% or more and 99% or less, 98% or less, 95% or less, or 93% or less based on 100% of the area of the surface of the non-coated portion of the first electrode facing the current collecting plate.

When the area satisfies the above-mentioned ratio, the plurality of passageways through which the current may move from the non-coated portion of the first electrode to the current collecting plate may be effectively implemented, such that a magnitude of resistance applied to the electrode assembly may be reduced.

In the embodiment of the present specification, the non-coated portion of the first electrode of the electrode assembly may be present at a portion corresponding to the leg of the current collecting plate but not present at a portion that does not correspond to the leg of the current collecting plate.

In the embodiment of the present specification, the non-coated portion of the first electrode of the electrode assembly may be cut to have the same shape as the current collecting plate.

In the embodiment of the present specification, the bent portion of the non-coated portion of the first electrode of the electrode assembly may be cut to have the same shape as the current collecting plate.

In the embodiment of the present specification, the bent portion of the non-coated portion of the first electrode of the electrode assembly may be cut to have the same shape as the current collecting plate having two, four, or six legs, like the current collecting plate illustrated in FIGS. 5 to 7.

In the embodiment of the present specification, the ratio of the area in which the leg is in contact with the non-coated portion of the first electrode may be 10% or more, 15% or more, 20% or more, 30% or more, 40% or more, 50% or more, 70% or more, or 90% or more and 99% or less, 98% or less, 95% or less, or 93% or less based on 100% of the area of the leg.

In the embodiment of the present specification, the current collecting plate may further include a terminal connection part 45 extending outward from the central portion. Since the current collecting plate further includes the terminal connection part, the current collecting plate according to the present invention not only serves as a current collecting plate for collecting the current but also serves as the electrode tab for moving the current to the electrode terminal. Therefore, it is possible to reduce the number of components used to manufacture the secondary battery and omit the process of welding a separate electrode tab to the non-coated portion or the current collecting plate, thereby improving process efficiency.

In the embodiment of the present specification, the terminal connection part may be manufactured integrally with the current collecting plate.

In the embodiment of the present specification, the terminal connection part may be provided between the adjacent legs.

In the embodiment of the present specification, a thickness of the connection part between the terminal connection part and the current collecting plate may be equal to a thickness of the current collecting plate.

In the embodiment of the present specification, the terminal connection part may be bent one or more times in the direction toward the central portion of the current collecting plate.

In the embodiment of the present specification, the terminal connection part may be bent two or more times in the direction toward the central portion of the current collecting plate.

The terminal connection part may be positioned to be spaced apart from the leg and connected directly to a cap plate of a sealing body to be described below or coupled to a connection plate attached to the cap plate.

In the embodiment of the present specification, the thickness of the terminal connection part may be 0.15 mm or more and 0.6 mm or less, 0.15 mm or more and 0.5 mm or less, 0.17 mm or more and 0.3 mm or less, or equal to the thickness of the current collecting plate.

In the embodiment of the present specification, the length of the terminal connection part may be 20 mm or more and 40 mm or less, or 25 mm or more and 35 mm or less. The length of the terminal connection part means a length from the connection part between the terminal connection part and the central portion of the current collecting plate to a distal end of the terminal connection part extending from the connection part.

Since the terminal connection part is bent one or more times and coupled to the connection plate to be described below, a space for coupling the terminal connection part and the connection plate is required in the secondary battery. When the above-mentioned length is satisfied, the space used for coupling the terminal connection part and the connection plate to be described below may be efficiently used, and an unnecessary space may be minimized. As a result, it is possible to increase the capacity of the secondary battery.

In the embodiment of the present specification, a width of the terminal connection part may be 8% or more and 35% or less, 10% or more and 30% or less, or 10% or more and 25% or less based on 100% of the outer diameter L of the secondary battery.

When the above-mentioned width is satisfied and the terminal connection part is bent one or more times, the space for coupling the connection plate to be described below may be efficiently used, and the coupling area with the connection plate, for example, the area of the current path may be maximized. Therefore, it is possible to solve a problem of internal heat generation that occurs during high-speed charging.

For example, the electrode assembly according to the embodiment of the present specification may have a jelly-roll structure. The electrode assembly may be manufactured by interposing a separator between the first and second electrodes having the sheet shape, stacking the separator and the first and second electrodes at least once to form a stack, and winding the stack around a winding central portion.

In the embodiment of the present specification, the first electrode includes a first current collector and an electrode active material layer provided on one surface or two opposite surfaces of the first current collector. The non-coated portion of the first electrode, which does not have the electrode active material layer, is present at a long side end of a winding direction of the first current collector provided at one end of a winding axis of the electrode assembly. The non-coated portion of the first electrode is provided at an upper side in a height direction (a direction parallel to a Z-axis) of the electrode assembly accommodated in the battery can. That is, the first current collector includes the non-coated portion of the first electrode disposed at the long side end thereof and exposed to the outside of the separator, and the non-coated portion of the first electrode is not coated with the electrode active material.

In the embodiment of the present specification, the second electrode includes a second electrode current collector and a second electrode active material layer provided on one surface or two opposite surfaces of the second electrode current collector. A non-coated portion of the second electrode is present at the other side end in a width direction (a direction parallel to the Z-axis) of the second electrode current collector, and the non-coated portion of the second electrode does not include the second electrode active material layer.

The non-coated portion of the second electrode is provided at a lower side in the height direction (direction parallel to the Z-axis) of the electrode assembly accommodated in the battery can. That is, the second electrode current collector includes a second non-coated portion disposed at the long side end thereof and exposed to the outside of the separator, and the second non-coated portion is not coated with the electrode active material layer. At least a part of the second non-coated portion itself may be used as the electrode tab. For example, the second non-coated portion may be a negative electrode tab.

In the embodiment of the present specification, the first electrode may be a positive plate, and the second electrode may be a negative plate.

In the embodiment of the present specification, the first electrode may be a negative plate, and the second electrode may be a positive plate.

That is, the positive and negative plates each have a structure in which a current collector 20 having a sheet shape is coated with an active material 21 and include a non-coated portion 22 disposed at one long side based on the winding direction. In this case, an additional separator may be provided on an outer peripheral surface of the electrode assembly 100 to implement insulation from the battery can 41. The jelly-roll structure known in the art may be applied to the present invention without limitation.

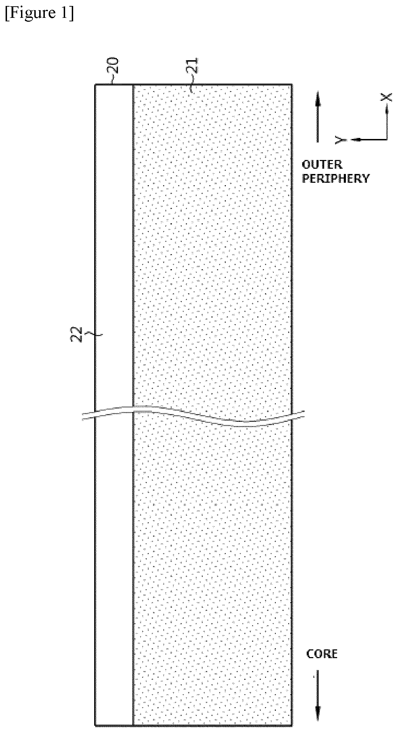

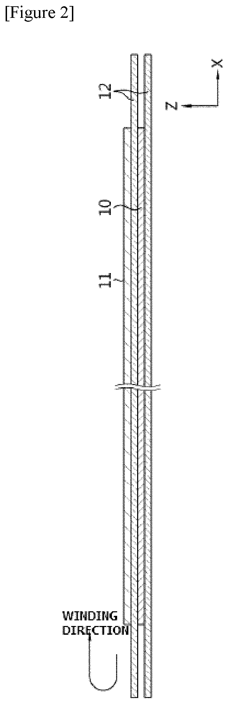

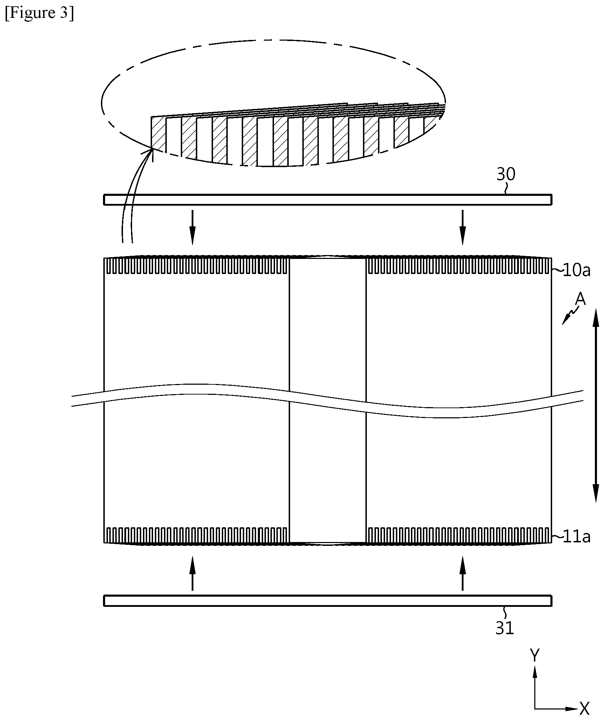

FIG. 1 illustrates a structure of the current collector according to the embodiment of the present specification, FIG. 2 illustrates a process of winding the current collector according to the embodiment of the present specification, and FIG. 3 illustrates a process of welding the current collecting plate to the bent surface of the non-coated portion according to the embodiment of the present specification. FIG. 4 is a view illustrating a structure of the secondary battery including the electrode assembly, the current collecting plate, and the sealing body.

Referring to FIGS. 1 to 3, the positive and negative plates 10 and 11 each have the structure in which the current collector 20 having the sheet shape is coated with the active material 21 and include the non-coated portion 22 disposed at one long side based on the winding direction X.

The electrode assembly is manufactured by sequentially stacking the positive plate 10 and the negative plate 11 together with two sheets of separators 12 to form a stack, as illustrated in FIG. 2, and then winding the stack in one direction X. In this case, the non-coated portion of the positive plate 10 and the non-coated portion of the negative plate 11 are disposed in opposite directions. After the winding process, the non-coated portion 10a of the positive plate 10 and the non-coated portion 11a of the negative plate 11 are bent toward the core. Thereafter, the current collecting plate 30 and the second current collecting plate 31 are respectively coupled to the non-coated portions 10a and 11a by welding.

The separate electrode tab is not coupled to the positive electrode non-coated portion 10a and the negative electrode non-coated portion 11a, and the current collecting plate 30 and the second current collecting plate 31 are connected to the external electrode terminals. Therefore, a current path having a large cross-sectional area is formed in the direction of the winding axis of the electrode assembly A (see the arrow), thereby reducing the resistance of the battery cell. This is because the resistance is inversely proportional to a cross-sectional area of a passageway through which current flows.

In the embodiment of the present specification, any active material publicly known in the art may be used, without limitation, as the positive electrode active material applied onto the positive plate and the negative electrode active material applied onto the negative plate.

As an example, the positive electrode active material may include alkaline metal compound expressed by a general chemical formula $A[A_xM_y]O_2+z$ (A includes one or more elements among Li, Na, and K, M includes one or more elements selected from Ni, Co, Mn, Ca, Mg, Al, Ti, Si, Fe, Mo, V, Zr, Zn, Cu, Al, Mo, Sc, Zr, Ru, and Cr, $x \geq 0$, $1 \leq x+y \leq 2$, and $-0.1 \leq z \leq 2$ in which stoichiometric coefficients x, y, and z are selected so that the compound is kept neutral electrically).

As another example, the positive electrode active material may be alkaline metal compound $xLiM^1O_2 \cdot (1-x)Li_2M_2O_3$ ($M^1$ includes one or more elements having average oxidation state 3, $M^2$ includes one or more elements having average oxidation state 4, and $0 \leq x \leq 1$) disclosed in US Patent No. 6,677,082, US Patent No. 6,680,143, and the like.

As still another example, the positive electrode active material may be lithium metal phosphate expressed by a general chemical formula $Li_aM^1_xFe_{1-x}M^2yP_{1-y}M^3_zO_{4-z}$ ($M^1$ includes one or more elements selected from Ti, Si, Mn, Co, Fe, V, Cr, Mo, Ni, Nd, Al, Mg, and Al, $M^2$ includes one or more elements selected from Ti, Si, Mn, Co, Fe, V, Cr, Mo, Ni, Nd, Al, Mg, Al, As, Sb, Si, Ge, V, and S, $M^3$ includes halogen family elements selectively including F, $0 < a \leq 2$, $0 \leq x \leq 1$, $0 \leq y < 1$, and $0 \leq z < 1$ in which stoichiometric coefficients a, x, y, and z are selected so that the compound is kept neutral electrically) or $Li_3M_2(PO_4)_3$ (M includes one or more elements selected from Ti, Si, Mn, Fe, Co, V, Cr, Mo, Ni, Al, Mg, and Al)

In particular, the positive electrode active material may include primary particles and/or secondary particles in which the primary particles are agglomerated.

As an example, carbon materials, lithium metal or lithium metal compound, silicon or silicon compound, tin or tin compound, and the like may be used as the negative electrode active material. A metal oxide such as $TiO_2$ and $SnO_2$ having electric potential of less than 2 V may be used as the negative electrode active material. Both low-crystalline carbon and/or high-crystalline carbon may be used as the carbon material.

In the embodiment of the present specification, a porous polymer film, for example, a porous polymer film made of polyolefin-based polymer such as ethylene homopolymer, propylene homopolymer, ethylene/butene copolymer, ethylene/hexene copolymer, or ethylene/methacrylate copolymer may be used singly as the separator or a stake of the porous polymer films may be used as the separator. As another example, a typical porous non-woven fabric, for example, a non-woven fabric made of high-melting point fiberglass, polyethylene terephthalate fiber, or the like may be used as the separator.

At least one surface of the separator may include a coating layer containing inorganic particles. In addition, the separator itself may be a coating layer containing inorganic particles. The particles constituting the coating layer may be coupled by a binder so that an interstitial volume is present between the adjacent particles.

The inorganic particles may be made of inorganic substance with permittivity of 5 or more. As a non-restrictive example, the inorganic particle may include one or more substances selected from a group consisting of $Pb(Zr,Ti)O_3(PZT)$, $Pb_{1-x}La_xZr_{1-y}Ti_yO_3(PLZT)$, $PB(Mg_3Nb_{2/3})O_3$-$PbTiO_3(PMN$-$PT)$, $BaTiO_3$, hafnia($HfO_2$), $SrTiO_3$, $TiO_2$, $Al_2O_3$, $ZrO_2$, $SnO_2$, $CeO_2$, $MgO$, $CaO$, $ZnO$, and $Y_2O_3$.

The electrolyte may be salt having a structure such as $A^+B^-$. In this case, $A^+$ includes ions including alkaline metal cations such as $Li^+$, $Na^+$, and $K^+$ or a combination thereof. Further, B- includes one or more anions selected from a group consisting of $F^-$, $Cl^-$, $Br^-$, $I^-$, $NO_3^-$, $N(CN)_2^-$, $BF_4^-$, $ClO_4^-$, $AlO_4^-$, $AlCl_4^-$, $PF_6^-$, $SbF_6^-$, $AsF_6^-$, $BF_2C_2O_4^-$, $BC_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^{--}$, $C_4F_9SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$.

In addition, the electrolyte may be dissolved in an organic solvent and used. Propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), $\gamma$-butyrolactone, or a mixture thereof may be used as the organic solvent.

In the embodiment of the present specification, the non-coated portion of the first electrode and/or the second electrode may be bent toward the core from the outer periphery of the electrode assembly, thereby forming bent surfaces at the upper and lower portions of the electrode assembly. In addition, the current collecting plate may be welded to the bent surface formed by bending the non-coated portion of the first electrode, and the second current collecting plate may be welded to the bent surface formed by bending the non-coated portion of the second electrode.

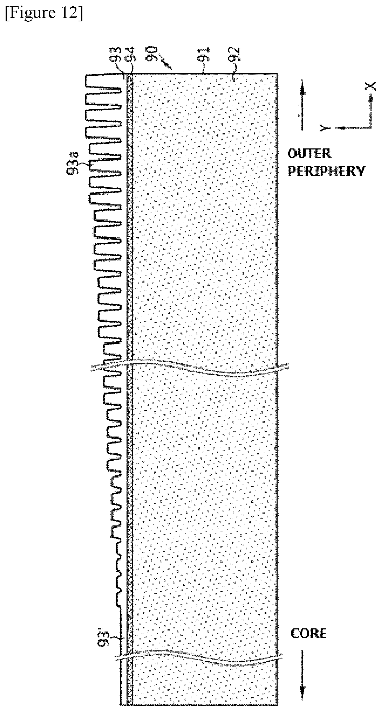

The first electrode and/or the second electrode may have different structures to mitigate stress generated when the non-coated portion of the first electrode and/or the second electrode is bent. FIG. 12 is a top plan view exemplarily illustrating a structure of an electrode 90 according to the embodiment of the present invention.

Referring to FIG. 12, the electrode 90 includes a current collector 91 having a sheet shape, an active material layer 92 formed on at least one surface of the current collector 91, and a non-coated portion 93 disposed at a long side end of the current collector 91, and the non-coated portion 93 is not coated with an active material.

The non-coated portion 93 may include a plurality of notched segmental pieces 93a. The plurality of segmental pieces 93a constitutes a plurality of groups, and the segmental pieces 93a included in each of the groups may have the same height (length in a Y direction), the same width (length in an X direction), and/or the same spacing pitch. The number of segmental pieces 93a included in each of the groups may further increase or decrease than illustrated. The segmental piece 93a may have a trapezoidal shape and be modified in a quadrangular, parallelogrammatic, semi-circular, or semi-elliptical shape. In particular, the height of the segmental piece 93a may increase in a stepwise manner in the direction from the core to the outer periphery. In addition, a core side non-coated portion 93' disposed adjacent to the core may not include the segmental piece 93a, and the core side non-coated portion 93' may have a smaller height than other non-coated portion regions.

In the embodiment of the present specification, the electrode 90 may include an insulating coating layer 94 configured to cover a boundary between the active material layer 92 and the non-coated portion 93. The insulating coating layer 94 contains polymer resin with insulation and may further selectively include an inorganic filler. The insulating coating layer 94 serves to prevent an end of the active material layer 92 from coming into contact with an active material layer having an opposite polarity and facing the active material layer 92 through the separator. The insulating coating layer 94 serves to structurally support the bent portion of the segmental piece 93a. To this end, at least a part of the insulating coating layer 94 may be exposed to the outside from the separator when the electrode 90 is wound as the electrode assembly.

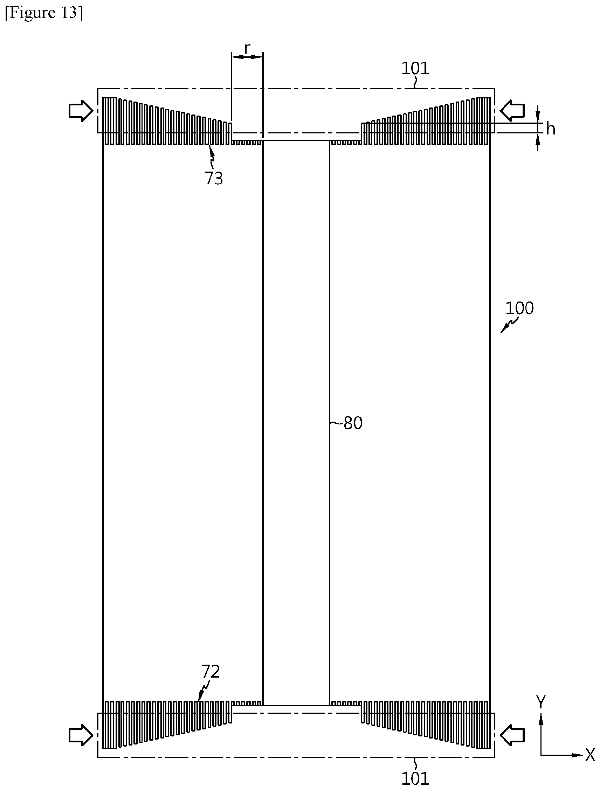

FIG. 13 is a cross-sectional view taken in the longitudinal direction Y and illustrating the electrode assembly A according to the embodiment of the present specification in which a segmental structure of the non-coated portion of the electrode 90 is applied to first and second electrodes.

Referring to FIG. 13, a non-coated portion 72 protruding downward extends from the first electrode, and a non-coated portion 73 protruding upward extends from the second electrode. The pattern in which heights of the non-coated portions 72 and 73 are changed is schematically illustrated. That is, the heights of the non-coated portions 72 and 73 may be irregularly changed depending on positions at which cross-sections are formed. For example, when a side portion of the trapezoidal segmental piece 93a is cut, a height of the non-coated portion is smaller than a height of the segmental piece 93a in a cross-sectional view. Therefore, it should be understood that the heights of the non-coated portions 72 and 73 illustrated in the drawing illustrating a cross-section of the electrode assembly A correspond to an average height of the non-coated portion included in the respective winding turns.

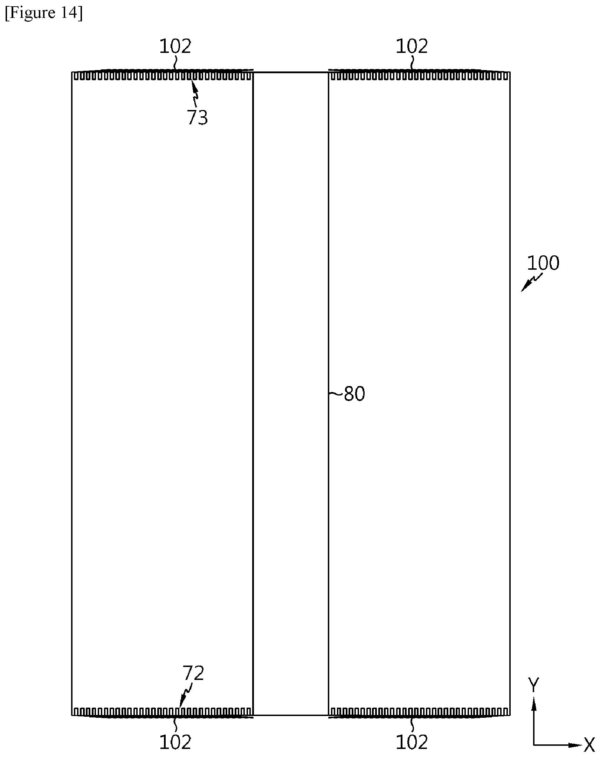

As illustrated in FIG. 14, the non-coated portions 72 and 73 may be bent toward the core from the outer periphery of the electrode assembly A. FIG. 13 illustrates bent parts 101 indicated by boxed with dotted lines. When the non-coated portions 72 and 73 are bent, the segmental pieces radially adjacent to one another are superimposed in multiple layers, such that bent surfaces 102 are formed at upper and lower portions of the electrode assembly A. In this case, the core side non-coated portion (93' in FIG. 8) has a small height and thus is not bent. A height h of the segmental piece, which is bent at the innermost side, is equal to or smaller than a radial length r of a winding region formed by the core side non-coated portion 93' having no segmental piece structure. Therefore, a cavity 80 positioned at the core of the electrode assembly A is not closed by the bent segmental pieces. When the cavity 80 is not closed, there is no difficulty in the process of injecting the electrolyte, and efficiency in injecting the electrolyte is improved.

In the embodiment of the present specification, the secondary battery may further include: the battery can configured to accommodate the electrode assembly and including an opening portion; and the sealing body configured to seal the opening portion of the battery can and including the cap plate and a sealing gasket. The terminal connection part may be coupled to the connection plate.

FIG. 4 is a cross-sectional view implemented by cutting the secondary battery in the Y direction. As illustrated in FIG. 4, the cap plate is inserted into the battery cap, and a part of the cap plate has a convex portion. One surface of the convex portion is exposed to the outside of the battery can. The connection plate is attached to an inner surface of the cap plate, e.g., a surface of the cap plate which is directed toward the electrode assembly except for an inner surface of the convex portion.

A connection plate 42c may be connected to the terminal connection part of the inner current collecting plate 30 of the battery can.

The battery can 41 may be made of, but not limited to, a conductive metallic material.

As illustrated in FIG. 4, the sealing body 42 includes a cap plate 42a, a sealing gasket 42b, and the connection plate 42c. The sealing gasket 42b surrounds an edge of the cap plate 42a and is fixed by a crimping portion 43. In addition, the electrode assembly A is fixed in the battery can 41 by a beading portion 44 so that the electrode assembly A is prevented from moving upward or downward.

The beading portion 44 prevents the electrode assembly A, which has a size corresponding to a width of the battery can 41, from being withdrawn through an opening portion at an upper end of the battery can 41. The beading portion 44 may serve as a support portion on which the cap plate 42a is seated. Referring to FIG. 4, the beading portion 44 means a concave portion of the battery can.

The crimping portion 43 is formed on an upper portion of the beading portion 44. The crimping portion 43 extends and bends to surround a part of an upper surface of the cap plate 42a and an outer peripheral surface of the cap plate 42a disposed on the beading portion 44.

In the secondary battery according to the present specification, the positive electrode terminal is the cap plate 42a of the sealing body 42, and the negative electrode terminal is the battery can 41. The current collecting plate 30 coupled to the non-coated portion 10a of the positive plate 10 is electrically connected to the connection plate 42c attached to the cap plate 42a by means of the terminal connection part. In addition, the current collecting plate 31 coupled to the non-coated portion 11a of the negative plate 11 is electrically connected to a bottom of the battery can 41.

In the embodiment of the present specification, the insulator 46 is disposed between the upper end of the electrode assembly A and the beading portion 44 or between the beading portion 44 and the current collecting plate 30 coupled to the upper portion of the electrode assembly A and prevents the contact between the terminal connection part 45 and the battery can 41 or the contact between the current collecting plate 30 and the battery can 41. The insulator 46 has an insulator hole 47 through which the terminal connection part 45 may be extended. The terminal connection part is extended upward through the insulator hole 47 and coupled to a lower surface of the connection plate 42c or a lower surface of the cap plate 42a.

In the present specification, the cap plate 42a may be made of a conductive metallic material such as aluminum, steel, or nickel. In addition, the sealing gasket 42b may be made of polypropylene, polybutylene terephthalate, polyfluorinated ethylene, or the like having insulation and elasticity. However, the present invention is not limited by the material of the cap plate 42a and the sealing gasket 42b.

In the embodiment of the present specification, the battery can 41 may further include a venting portion 41a formed on a lower surface thereof. The venting portion 41a corresponds to a region having a smaller thickness than a peripheral region of the lower surface of the battery can 41. The venting portion 41a is structurally weak in comparison with the peripheral region. Therefore, when an abnormality occurs on the secondary battery and an internal pressure increases to a predetermined level or higher, the venting portion 41a is fractured, and gas produced in the battery can 41 is discharged.

In the embodiment of the present specification, the secondary battery may further include the second current collecting plate 31 welded to the non-coated portion of the second electrode 11a. The second current collecting plate 31 is made of a conductive metallic material such as aluminum, steel, or nickel.

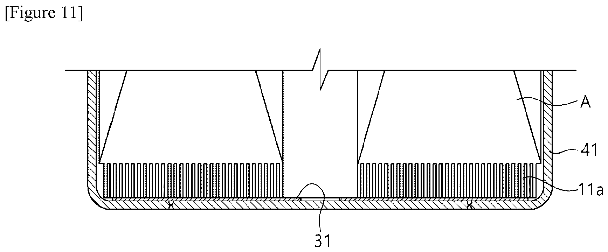

The second current collecting plate may be coupled and welded to a bottom surface in the battery can. That is, as illustrated in FIG. 11, one surface of the second current collecting plate may be welded to the non-coated portion of the second electrode, and the other surface of the second current collecting plate may be welded to the battery can. The shape of the second current collecting plate may be identical to the shape of the above-mentioned current collecting plate. However, the shape is not limited as long as the second current collecting plate is typically used in the art without having an additional electrode tab.

In the embodiment of the present specification, the secondary battery may be a cylindrical secondary battery having a ratio of a form factor larger than 0.4 (the ratio of the form factor is defined as a value made by dividing a diameter of the cylindrical battery by a height of the cylindrical battery, i.e., a ratio of a diameter $\Phi$ to a height H). In this case, the form factor means a value indicating the diameter and the height of the cylindrical secondary battery.

In the related art, batteries having the ratio of the form factor of approximately 0.4 or less are used. That is, in the related art, 18650 cell, 21700 cell, and the like are used, for example. In the case of 18650 cell, a diameter thereof is approximately 18 mm, a height thereof is approximately 65 mm, and a ratio of the form factor thereof is approximately 0.277. In the case of 21700 cell, a diameter thereof is approximately 21 mm, a height thereof is approximately 70 mm, and a ratio of the form factor thereof is approximately 0.300.

The cylindrical secondary battery according to the embodiment of the present specification may be 46110 cell, 48750 cell, 48110 cell, 48800 cell, or 46800 cell. In the numerical value indicating the form factor, the first two numbers indicate a diameter of the cell, the next two numbers indicate a height of the cell, and the final number 0 indicates that a cross-section of the cell is circular.

The secondary battery according to the embodiment of the present specification may be a cylindrical secondary battery that is a cylindrical cell and has a diameter of 46 mm, a height of 110 mm, and a ratio of the form factor of 0.418.

The secondary battery according to the embodiment of the present specification may be a cylindrical secondary battery that is a cylindrical cell and has a diameter of 48 mm, a height of 75 mm, and a ratio of the form factor of 0.640.

The secondary battery according to the embodiment of the present specification may be a cylindrical secondary battery that is a cylindrical cell and has a diameter of 48 mm, a height of 110 mm, and a ratio of the form factor of 0.418.

The secondary battery according to the embodiment of the present specification may be a cylindrical secondary battery that is a cylindrical cell and has a diameter of 48 mm, a height of 80 mm, and a ratio of the form factor of 0.600.

The secondary battery according to the embodiment of the present specification may be a cylindrical secondary battery having a cylindrical shape, a diameter of 46 mm, a height of 80 mm, and a ratio of the form factor of 0.575.

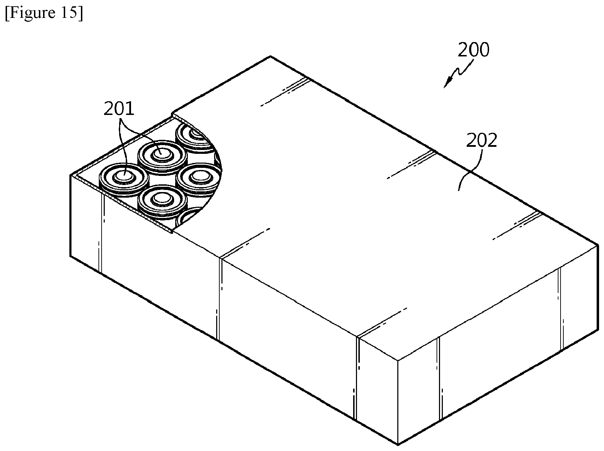

The secondary battery according to the embodiment of the present specification may be used to manufacture a battery pack. FIG. 15 is a view schematically illustrating a configuration of a battery pack according to an embodiment of the present invention.

Referring to FIG. 15, a battery pack 200 according to the embodiment of the present invention includes an assembly to which a secondary battery cell 201 is electrically connected, and a pack housing 202 configured to accommodate the assembly. The cylindrical secondary battery cell 201 is the battery cell according to the above-mentioned embodiment. For convenience of illustration, components such as busbars for electrical connection between the cylindrical battery cells 201, a cooling unit, and an external terminal are omitted from the drawings.

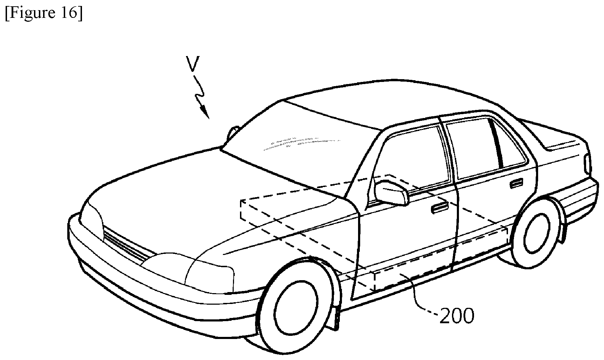

The battery pack 200 may be mounted on a vehicle. For example, the vehicle may be an electric vehicle, a hybrid vehicle, or a plug-in hybrid vehicle. The vehicle may be a four-wheel vehicle or a two-wheel vehicle. FIG. 16 is a view for explaining a vehicle including the battery pack 200 illustrated in FIG. 15.

Referring to FIG. 16, a vehicle V according to the embodiment of the present specification includes the battery pack 200 according to the embodiment of the present specification. The vehicle V operates by receiving electric power from the battery pack 200 according to the embodiment of the present invention.

The present invention has been described with reference to the limited embodiments and the drawings, but the present invention is not limited thereto. The described embodiments may be changed or modified by those skilled in the art to which the present invention pertains within the technical spirit of the present invention and within the scope equivalent to the appended claims.

**Claims**

1. A secondary battery comprising:

an electrode assembly made by stacking and winding a first electrode, a separator, and a second electrode, the first electrode comprising a first electrode current collector and an electrode active material layer provided on the first electrode current collector, wherein a non-coated portion of the first electrode, on which the electrode active material layer is not provided, is provided at a long side end of the first electrode based on a direction in which the current collector is wound; and

a current collecting plate provided at one end of the electrode assembly at which the non-coated portion of the first electrode is exposed, the current collecting plate comprising: a central portion corresponding to a core of the electrode assembly; and two or more legs each having one end connected to the central portion, the leg extending in a direction toward an outer periphery of the electrode assembly and electrically connected to the non-coated portion of the first electrode, wherein the central portion comprises a current collecting plate hole.

2. The secondary battery of claim 1, wherein the two or more legs of the current collecting plate have a straight shape, a cross shape, or a combination of the straight and cross shapes.

3. The secondary battery of claim 1, wherein the two or more legs are each welded and electrically connected to the non-coated portion of the first electrode.

4. The secondary battery of claim 1, wherein a thickness of the current collecting plate is 0.15 mm or more and 0.6 mm or less.

5. The secondary battery of claim 1, wherein the current collecting plate further comprises a terminal connection part electrically connected to the central portion.

6. The secondary battery of claim 1, wherein a length of the leg is 25% or more and 50% or less based on 100% of an outer diameter of the secondary battery.

7. The secondary battery of claim 1, wherein a width of the leg is 6% or more and 22% or less based on 100% of an outer diameter of the secondary battery.

8. The secondary battery of claim 1, wherein a ratio of an area in which the current collecting plate and the non-coated portion of the first electrode are in contact with each other is 10% or more and 99% or less based on 100% of an area of a surface of the current collecting plate facing the non-coated portion of the first electrode.

9. The secondary battery of claim 1, wherein a ratio of an area in which the non-coated portion of the first electrode and the current collecting plate are in contact with each other is 10% or more and 99% or less based on 100% of an area of a surface of the non-coated portion of the first electrode facing the current collecting plate.

10. The secondary battery of claim 1, wherein an aperture ratio of the current collecting plate, which is defined by the following Equation 1, is 20% or more and less than 100%,

[Equation 1]

Aperture ratio (%) = 1 - (an area in which the current collecting plate is in contact with an upper surface of the electrode assembly) / (an area of a circle having a diameter equal to an outer diameter of the electrode assembly) = (an area in which the current collecting plate is not in contact with the upper surface of the electrode assembly) / (the area of the circle having the diameter equal to the outer diameter of the electrode assembly)

11. The secondary battery of claim 5, wherein the terminal connection part is bent one or more times in a direction toward the central portion of the current collecting plate.

**12.** The secondary battery of claim 5, wherein the terminal connection part is provided between the adjacent two legs.

**13.** The secondary battery of claim 5, wherein a thickness of a connection part between the terminal connection part and the current collecting plate is equal to a thickness of the current collecting plate.

**14.** The secondary battery of claim 5, wherein a length of the terminal connection part is 20 mm or more and 40 mm or less.

**15.** The secondary battery of claim 5, wherein a width of the terminal connection part is 8% or more and 35% or less based on 100% of an outer diameter of the secondary battery.

**16.** The secondary battery of claim 5, further comprising:

a battery can configured to accommodate the electrode assembly and comprising an opening portion; and
a sealing body configured to seal the opening portion of the battery can and comprising a cap plate and a sealing gasket,
wherein the terminal connection part is connected directly to the cap plate or coupled to a connection plate attached to the cap plate.

**17.** A battery pack comprising a plurality of secondary batteries according to any one of claims 1 to 16.

**18.** A vehicle comprising at least one battery pack according to claim 17.

[Figure 1]

[Figure 2]

[Figure 3]

[Figure 4]

[Figure 5]

[Figure 6]

[Figure 7]

[Figure 8]

[Figure 9]

[Figure 10]

[Figure 11]

[Figure 12]

[Figure 13]

[Figure 14]

[Figure 15]

[Figure 16]

## INTERNATIONAL SEARCH REPORT

| International application No. |
|---|
| **PCT/KR2022/002436** |

### A.  CLASSIFICATION OF SUBJECT MATTER

**H01M 50/538**(2021.01)i; **H01M 50/536**(2021.01)i; **H01M 10/04**(2006.01)i

According to International Patent Classification (IPC) or to both national classification and IPC

### B.  FIELDS SEARCHED

Minimum documentation searched (classification system followed by classification symbols)

H01M 50/538(2021.01); H01M 10/04(2006.01); H01M 2/02(2006.01); H01M 2/04(2006.01); H01M 2/22(2006.01); H01M 2/26(2006.01); H01M 4/26(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무지부(active material non-coated portion), 집전판(collector plate), 레그(leg), 홀 (hole)

### C.  DOCUMENTS CONSIDERED TO BE RELEVANT

| Category* | Citation of document, with indication, where appropriate, of the relevant passages | Relevant to claim No. |
|---|---|---|
| Y | KR 10-1023865 B1 (SB LIMOTIVE CO., LTD.) 22 March 2011 (2011-03-22)<br>    See paragraphs [0028]-[0050], claim 1 and figures 2-6. | 1-18 |
| Y | KR 10-0922352 B1 (SAMSUNG SDI CO., LTD.) 21 October 2009 (2009-10-21)<br>    See paragraphs [0033]-[0052] and figures 1, 3 and 5. | 1-18 |
| A | KR 10-2020-0035739 A (SAMSUNG SDI CO., LTD.) 06 April 2020 (2020-04-06)<br>    See claim 1 and figure 5. | 1-18 |
| A | JP 2002-015732 A (ISHIKAWAJIMA HARIMA HEAVY IND. CO., LTD.) 18 January 2002 (2002-01-18)<br>    See claims 1-3 and figures 3 and 7. | 1-18 |
| A | KR 10-1361193 B1 (SAMSUNG SDI CO., LTD.) 11 February 2014 (2014-02-11)<br>    See claim 1 and figure 3. | 1-18 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 June 2022** | **09 June 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/002436**

| Patent document cited in search report | | | Publication date (day/month/year) | Patent family member(s) | | | Publication date (day/month/year) |
|---|---|---|---|---|---|---|---|
| KR | 10-1023865 | B1 | 22 March 2011 | KR | 10-2010-0096720 | A | 02 September 2010 |
| | | | | US | 2010-0216001 | A1 | 26 August 2010 |
| | | | | US | 2014-0017565 | A1 | 16 January 2014 |
| | | | | US | 8557430 | B2 | 15 October 2013 |
| | | | | US | 9136538 | B2 | 15 September 2015 |
| KR | 10-0922352 | B1 | 21 October 2009 | CN | 101404338 | A | 08 April 2009 |
| | | | | CN | 101404338 | B | 25 April 2012 |
| | | | | EP | 2045854 | A2 | 08 April 2009 |
| | | | | EP | 2045854 | A3 | 07 January 2015 |
| | | | | EP | 2045854 | B1 | 24 July 2019 |
| | | | | JP | 2009-087915 | A | 23 April 2009 |
| | | | | JP | 4996487 | B2 | 08 August 2012 |
| | | | | KR | 10-2009-0034124 | A | 07 April 2009 |
| | | | | US | 2009-0087733 | A1 | 02 April 2009 |
| | | | | US | 9040191 | B2 | 26 May 2015 |
| KR | 10-2020-0035739 | A | 06 April 2020 | CN | 112956061 | A | 11 June 2021 |
| | | | | EP | 3859851 | A1 | 04 August 2021 |
| | | | | US | 2022-0037747 | A1 | 03 February 2022 |
| | | | | WO | 2020-067688 | A1 | 02 April 2020 |
| JP | 2002-015732 | A | 18 January 2002 | None | | | |
| KR | 10-1361193 | B1 | 11 February 2014 | KR | 10-2008-0095612 | A | 29 October 2008 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210022832
- US 6677082 B
- US 6680143 B